# FASCICULE DE BREVET EUROPEEN

(11) **EP 3 126 658 B1**
(45) Date de publication et mention de la délivrance du brevet: **16.01.2019**
(21) Numéro de dépôt: 15713993.2
(22) Date de dépôt: 09.03.2015
(51) Int. Cl.: F02K 1/72, F02K 1/76, F02K 1/62

(54) **INVERSEUR DE POUSSÉE D'UNE NACELLE DE TURBORÉACTEUR, COMPRENANT DES VÉRINS DE COMMANDE DES CAPOTS MOBILES ET D'UNE TUYÈRE SECONDAIRE VARIABLE**
SCHUBUMKEHRVORRICHTUNG EINER TURBOLUFTSTRAHLTRIEBWERKSGONDEL MIT AKTUATOREN FÜR DEN BETRIEB DER BEWEGLICHEN HAUBEN UND VARIABLEN SEKUNDÄRDÜSE
TURBOJET ENGINE NACELLE THRUST REVERSER COMPRISING ACTUATORS FOR OPERATING THE MOBILE COWLS AND A VARIABLE SECONDARY NOZZLE

(30) Priorité: 31.03.2014 FR 1452823
(43) Date de publication de la demande: 08.02.2017
(73) Titulaire: Safran Nacelles, 76700 Gonfreville-l'Orcher (FR)
(72) Inventeur: BOILEAU, Patrick, F-31170 Tournefeuille (FR); KERBLER, Olivier, F-92160 Antony (FR)
(74) Mandataire: Gaillarde, Frédéric F. Ch.
(86) Numéro de dépôt international: PCT/FR2015/050567
(87) Numéro de publication internationale: WO 2015/150653

(56) Documents cités:
- EP-A1- 0 822 327
- WO-A2-2012/010774
- GB-A- 1 545 089
- US-A- 4 147 029

## Description

La présente invention concerne un inverseur de poussée pour une nacelle d'aéronef recevant un turboréacteur, ainsi qu'une nacelle d'aéronef équipée d'un tel inverseur de poussée.

Les ensembles de motorisation pour les aéronefs comportent généralement une nacelle formant une enveloppe extérieure globalement circulaire, comprenant à l'intérieur un turboréacteur disposé suivant l'axe longitudinal de cette nacelle. Le turboréacteur reçoit de l'air frais venant du côté amont ou avant, et rejette du côté aval ou arrière les gaz chauds issus de la combustion du carburant, qui donnent une certaine poussée.

Les turboréacteurs à double flux présentent autour de ce turboréacteur des aubes de soufflante générant un flux secondaire important d'air froid le long d'une veine annulaire passant entre le moteur et la nacelle, qui ajoute une poussée élevée.

Certaines nacelles comportent un système d'inversion de poussée qui ferme au moins en partie la veine annulaire d'air froid, et rejette le flux secondaire vers l'avant afin de générer une poussée de freinage de l'aéronef.

Un type d'inverseur de poussée connu, présenté notamment par le document FR-A1-2758161, comporte des capots mobiles arrière appelés « Trans-cowl », coulissant axialement vers l'arrière sous l'effet de vérins en déployant des volets dans la veine annulaire afin de fermer en majeure partie cette veine. Les volets renvoient le flux d'air froid radialement vers l'extérieur en passant par des grilles découvertes par les capots mobiles lors de leur coulissement, comprenant des aubes qui dirigent ce flux vers l'avant.

Le document US4147029 divulgue un inverseur de poussée selon le préambule de la revendication 1. Par ailleurs certaines nacelles comportent une tuyère secondaire arrière appelée « Variable Fan Nozzle » (VFN), donnant un flux secondaire variable grâce à un mouvement de translation du système de commande de cette tuyère qui est reliée aux capots mobiles de l'inverseur par des moyens de guidage permettant un mouvement axial.

Un système connu d'actionnement de l'inverseur de poussée ainsi que de la tuyère secondaire variable, comporte des vérins prenant appui sur la structure avant fixe pour dans un premier temps faire coulisser la tuyère secondaire vers l'arrière, puis quand elle arrive en butée sur ses moyens de guidage reliés aux capots mobiles de l'inverseur, dans un deuxième temps entraîner vers l'arrière ces capots mobiles qui s'ouvrent.

Un problème qui se pose avec ce système d'actionnement est que les vérins doivent comporter une course importante, représentant le cumul de la course de la tuyère secondaire et des capots mobiles. Ces vérins sont alors difficiles à concevoir à cause de leur longueur, pour résister notamment à la flexion, au flambage et à la tenue en fatigue.

De plus la longueur importante des vérins rend leur intégration compliquée dans la partie avant de la nacelle dédiée aux équipements, tout en évitant les zones comportant un risque de projections dans le cas de l'éclatement de la turbine.

La présente invention a notamment pour but d'éviter ces inconvénients de la technique antérieure.

Elle propose à cet effet un inverseur de poussée d'une nacelle de turboréacteur à double flux, comprenant des capots mobiles qui reculent par rapport à une structure avant fixe pour découvrir des grilles d'inversion de poussée, ainsi qu'une tuyère secondaire variable reliée aux capots mobiles par des moyens de guidage permettant un coulissement axial, caractérisé en ce qu'il comporte des vérins prenant appui sur la structure avant pour commander des moyens d'inversion du sens de déplacement liés aux capots mobiles, qui reculent la tuyère secondaire variable quand ces vérins délivrent une course vers l'avant, ainsi que des dispositifs de blocage qui lient la tuyère secondaire aux capots mobiles quand cette tuyère est déployée.

Un avantage de cet inverseur de poussée combiné à une tuyère secondaire variable est que les vérins peuvent dans un premier temps par une course vers l'avant mettre en oeuvre les moyens inversant le déplacement axial pour reculer le système de commande de la tuyère secondaire variable pour la position déployée, puis dans un deuxième temps en liant cette tuyère aux capots mobiles quand elle est en position déployée, par une course vers l'arrière faire reculer les capots mobiles.

On utilise alors des vérins disposant d'une course totale égale seulement à celle des capots mobiles, le déplacement de la tuyère secondaire étant intégré dans cette même course par le mouvement vers l'avant du vérin. Les vérins sont plus courts, la conception de ces vérins ainsi que leurs implantations dans la nacelle sont facilitées.

L'inverseur de poussée selon l'invention peut comporter de plus une ou plusieurs des caractéristiques suivantes, qui peuvent être combinées entre elles.

Avantageusement, les moyens d'inversion du sens de déplacement comportent des bielle(tte)s fixées par des pivots aux capots mobiles, qui constituent des moyens simples réalisant cette inversion.

En particulier, chaque bielle(tte) peut être fixée dans une partie centrale par un pivot aux capots mobiles, une extrémité étant reliée par une articulation au vérin, l'autre extrémité étant reliée aussi par une articulation à la tuyère secondaire.

Selon un mode de réalisation, l'inverseur de poussée comporte des verrous qui bloquent des extrémités des bielle(tte)s.

L'inverseur de poussée peut comporter des bielle(tte)s doubles disposées symétriquement par rapport à l'axe du vérin, présentant chacune un pivot relié aux capots. De cette manière on équilibre les efforts s'appliquant sur le moyen d'inversion et cela permet également d'augmenter le nombre de commandes pour l'actionnement de la tuyère secondaire variable et ainsi, par exemple, le nombre de volets de la dite tuyère.

Selon un autre mode de réalisation, les dispositifs de blocage présentent deux positions qui peuvent alternativement bloquer les capots sur la structure fixe avant, ou bloquer la tuyère secondaire sur ces capots. Avec un seul moyen de commande de ce dispositif de blocage, on réalise ainsi alternativement un blocage des deux positions.

Dans ce cas, les dispositifs de blocage peuvent comporter un verrou lié aux capots, qui bascule pour engager alternativement un moyen d'accrochage situé d'un côté sur la structure avant (position relative fixe), ou un autre moyen d'accrochage situé de l'autre côté sur les moyens d'inversion du sens de déplacement.

Avantageusement, les dispositifs de blocage comportent des moyens élastiques donnant deux positions stables de blocage et de déblocage. On sécurise ainsi de manière simple ces deux positions.

Dans ce cas les dispositifs de blocage peuvent comporter des leviers liés par des pivots aux capots, comportant des moyens de blocage venant s'ajuster sur des éléments liés aux vérins, un ressort étant comprimé entre ces leviers pour donner les deux positions stables de blocage et de déblocage.

L'invention a aussi pour objet une nacelle de turboréacteur comportant un inverseur de poussée comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- les figures 1a, 1b et 1c sont des schémas en coupe axiale d'un inverseur de poussée selon l'art antérieur, présenté successivement en position fermée avec la tuyère secondaire rétractée puis déployée, et en position ouverte ;
- la figure 2a, 2b et 2c sont des schémas en coupe axiale d'un inverseur de poussée selon l'invention, présenté successivement en position fermée avec la tuyère secondaire rétractée puis déployée, et en position ouverte ;
- les figures 3a et 3b présentent en coupe axiale un premier exemple de verrou, successivement en position bloquée et débloquée ;
- la figure 4 présente ce verrou dans un coupe axiale orthogonale suivant le plan de coupe IV-IV ;
- la figure 5 présente un deuxième exemple de verrou ; et
- les figures 6a, 6b et 6c sont des schémas d'un troisième exemple de verrou, présenté successivement en position fermée avec la tuyère secondaire rétractée puis déployée, et en position ouverte.

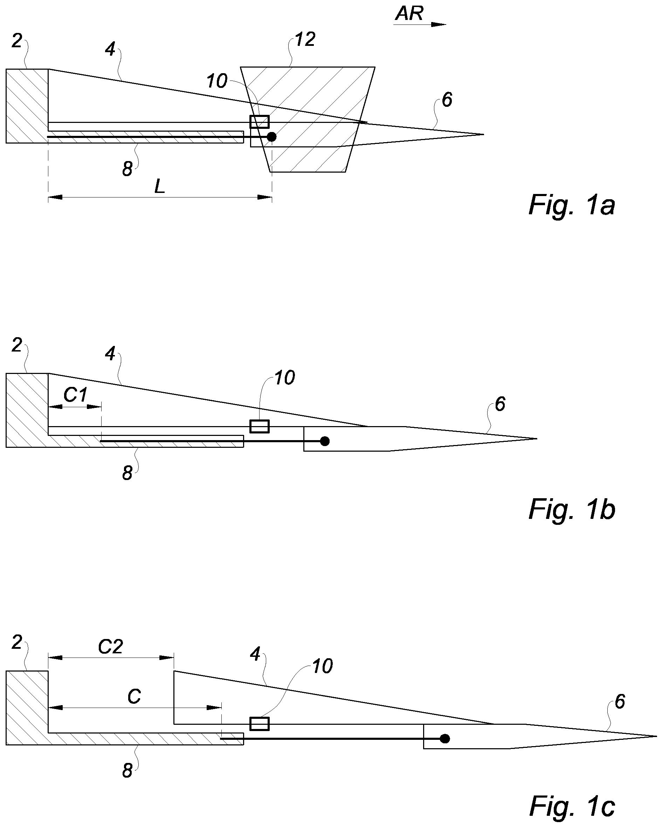

La figure 1 présente la partie arrière d'une nacelle de turboréacteur, la direction axiale arrière étant indiquée par la flèche « AR », comprenant une structure avant fixe 2, et des capots mobiles 4 ajustés en arrière de cette structure.

Chaque capot 4 est relié à la structure avant 2 par des moyens de guidage longitudinaux, qui permettent un coulissement de ces capots vers l'arrière pour ouvrir le passage du flux secondaire radialement vers l'extérieur, au travers de grilles d'inversion de poussée non représentées.

Une tuyère secondaire 6 disposée à l'arrière de la nacelle, est reliée aux capots 4 par des rails de guidage axiaux permettant une position rétractée vers l'avant présentée figure 1a, et une position déployée vers l'arrière présentée figure 1b qui améliore les rendements pour les hauts régimes de rotation du turboréacteur.

Des vérins 8 disposés longitudinalement des capots 4, comportent l'extrémité avant de leurs corps fixé à la structure avant 2, et une tige sortant vers l'arrière qui est fixée à la tuyère secondaire 6.

Chaque vérin 8 réalise après avoir ouvert un verrou 10 liant la tuyère secondaire 6 aux capots 4, une première course C1 qui déploie cette tuyère, puis quand la tuyère est en fin de course de ses rails de guidage, une deuxième course C2 qui recule vers l'arrière les capots 4, présentée figure 1c. Les vérins 8 comportent alors une course totale C égale à la somme des deux courses particulières C1 et C2.

Chaque vérin 8 comporte dans sa position rétractée une longueur totale L relativement importante nécessaire pour réaliser la course totale C imposée par l'addition des deux courses particulières, ce qui pose des problèmes de conception de ces vérins. De plus la fixation de la tige du vérin 8 sur la tuyère secondaire 6 se trouve dans une zone 12 pouvant recevoir des projections dans le cas de l'éclatement de la turbine, ce qui pose des problèmes de sécurité.

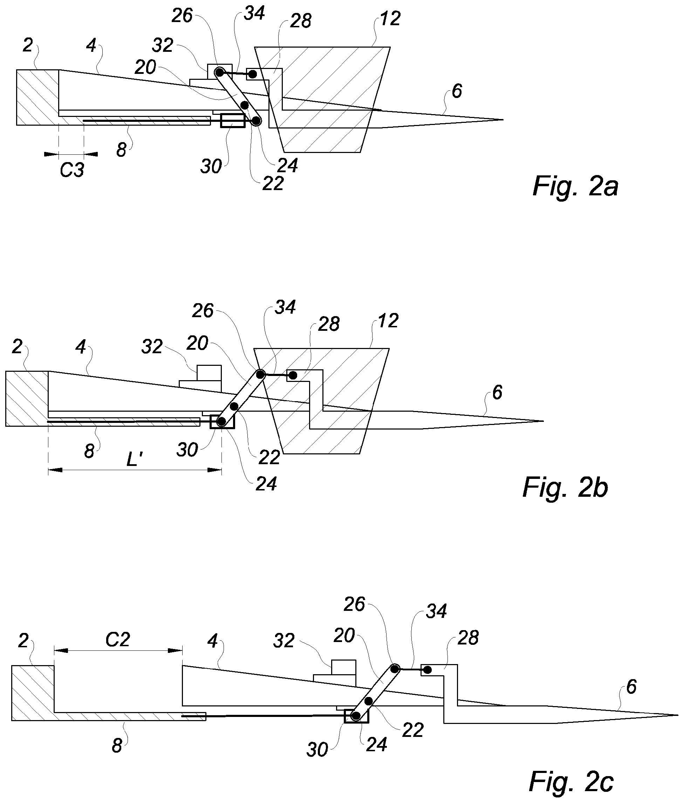

La figure 2a présente une bielle(tte) 2 fixée par un pivot 22 de sa partie centrale à un capot 4, son extrémité inférieure 24 étant reliée par une articulation à la tige du vérin 8, et son extrémité supérieure 26 étant reliée aussi par une articulation à un bras supérieur 28 de la tuyère secondaire 6, en passant par une bielle(tte) complémentaire 34.

L'inverseur de poussée comporte un premier verrou 32 qui bloque l'extrémité supérieure 26 de la bielle(tte) 20 sur le capot 4 quand la tuyère secondaire 6 est rétractée, cette extrémité supérieure étant dans sa position avant.

Après avoir ouvert le premier verrou 32, le vérin 8 réalisant une rétractation de sa tige vers l'avant suivant une course C3, comme présenté figure 2b, effectue un basculement de la bielle(tte) 20 autour de son pivot 22 qui entraîne vers l'arrière la tuyère secondaire 6.

On peut en prévoyant des longueurs de la bielle(tte) 20 différentes en partant de son pivot 22, réaliser une démultiplication du mouvement délivré par le vérin 8. En particulier comme présenté sur ces figures, la partie supérieure de la bielle(tte) 20 étant plus longue que sa partie inférieure, le mouvement est multiplié.

L'inverseur de poussée comporte un deuxième verrou 30 qui bloque l'extrémité inférieure 24 de la bielle(tte) 20 sur le capot 4, quand la tuyère secondaire 6 est déployée, cette bielle(tte) ayant sont inclinaison maximum. On peut alors comme présenté figure 2c, commander une sortie de la tige du vérin 8 suivant une course C2, qui la bielle(tte) 20 étant bloquée, entraîne l'ensemble formé par le capot 4 et la tuyère secondaire 6, pour ouvrir ce capot.

On obtient ainsi un vérin 8 présentant une longueur totale L' qui est plus courte, ayant à effectuer seulement la course C2 d'ouverture des capots 4. Ce vérin 8 est plus facile à loger dans la nacelle, et comporte moins de contraintes pour sa conception. De plus on notera que le vérin 8 ne rentre pas dans la zone pouvant recevoir des projections 12.

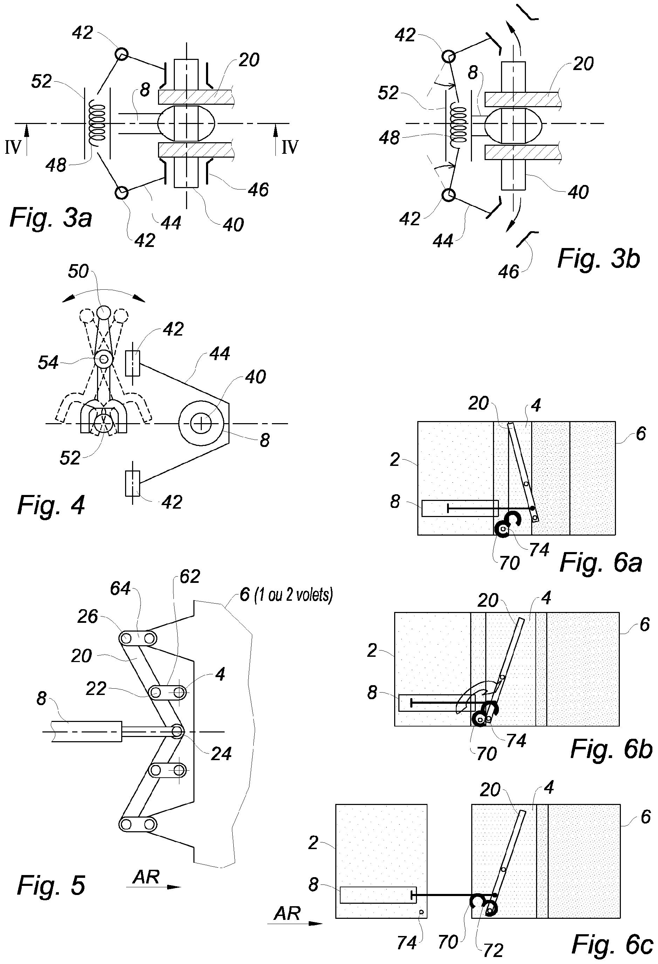

Les figures 3a, 3b et 4 présentent la tige du vérin 8 comportant à son extrémité un perçage transversal, recevant un axe 40 engagé dans des perçages de l'extrémité inférieure de la bielle(tte) 20.

La structure supportant les capots comporte de manière symétrique par rapport au vérin 8, deux pivots parallèles 42 disposés perpendiculairement à l'axe de ce vérin, qui reçoivent chacun un levier de blocage 44 comprenant deux bras formant un coude.

L'extrémité d'un premier bras de chaque levier 44 comporte un anneau de blocage 46 venant s'ajuster sur une extrémité de l'axe 40, l'extrémité du deuxième bras prenant appui sur un ressort hélicoïdal de compression 48, qui est serré de manière symétrique par le deuxièmes bras de l'autre levier de blocage.

Un levier de commande 50 oscillant autour d'un pivot 54 fixé à la structure supportant les capots, comporte son extrémité supérieure actionnée par un système de commande à double effet, et son extrémité inférieure disposant d'une fourchette 52 recevant le ressort 48 afin de le guider et de le déplacer latéralement.

En réalisant un basculement entre deux positions du levier de commande 50, on comprime d'abord le ressort 48 qui se détend ensuite pour donner deux positions stables de blocage ou de déblocage du verrou, comprenant respectivement l'engagement des anneaux de blocage 46 sur l'axe 40 comme présenté figure 3a, ou le dégagement de ces anneaux comme présenté figure 3b.

La figure 5 présente un doublement des bielle(tte)s d'inversion du déplacement axial, comprenant deux bielle(tte)s 20 disposées symétriquement par rapport à l'axe du vérin 8, présentant chacune un pivot 22 relié par un premier petit levier 62 à la structure supportant les capots 4. L'extrémité inférieure 24 des bielle(tte)s 20 est fixée à la tige du vérin 8, l'extrémité supérieure 22 étant reliée par un deuxième petit levier 64 à la tuyère secondaire 6.

De cette manière un déplacement axial de la tige du vérin 8 occasionne un basculement simultané des deux bielle(tte)s 20, l'effort étant réparti également entre ces deux bielle(tte)s ce qui diminue les contraintes maximales.

Les figures 6a, 6b et 6c présentent un autre type de verrou 70, comprenant deux crochets disposés symétriquement par rapport à un pivot 72 fixé sur la structure supportant les capots 4.

Le verrou 70 peut basculer sous l'action d'une commande à double effet, pour engager alternativement son crochet avant dans un pion de blocage 74 disposé sur la structure avant 2, ou son crochet arrière sur un autre pion de blocage disposé à l'extrémité inférieure de la bielle(tte) 20.

On obtient ainsi dans une première position où le crochet avant est engagé, un blocage des capots 4 sur la structure fixe avant 2 qui verrouille la fermeture de l'inverseur de poussée, et dans la deuxième position où le crochet arrière est engagé, un blocage du levier 20 dans sa position inclinée après le déploiement de la tuyère secondaire 6, qui permet de solidariser les capots avec cette tuyère pour faire reculer l'ensemble.

## Revendications

1. Inverseur de poussée d'une nacelle de turboréacteur à double flux, comprenant des capots mobiles (4) qui reculent par rapport à une structure avant fixe (2) pour découvrir des grilles d'inversion de poussée, ainsi qu'une tuyère secondaire variable (6) reliée aux capots mobiles par des moyens de guidage permettant un coulissement axial du système de commande de cette tuyère secondaire variable, et des vérins (8) prenant appui sur la structure avant (2) pour commander des moyens d'inversion du sens de déplacement (20) liés aux capots mobiles (4), qui reculent la tuyère secondaire variable (6) quand ces vérins délivrent une course vers l'avant, **caractérise en ce qu'**il comporte des dispositifs de blocage (30, 46, 70) qui lient la tuyère secondaire aux capots mobiles quand cette tuyère est déployée.

2. Inverseur de poussée selon la revendication 1, **caractérisé en ce que** les moyens d'inversion du sens de déplacement comportent des bielle(tte)s (20) fixées par des pivots (22) aux capots mobiles (4).

3. Inverseur de poussée selon la revendication 2, **caractérisé en ce que** chaque bielle(tte) (20) est fixée dans une partie centrale par un pivot (22) aux capots mobiles (4), une extrémité (24) étant reliée par une articulation au vérin (8), l'autre extrémité (26) étant reliée aussi par une articulation à la tuyère secondaire (6).

4. Inverseur de poussée selon la revendication 2 ou 3, **caractérisé en ce qu'**il comporte des verrous (30, 32) qui bloquent des extrémités (24, 26) des bielle(tte)s (20).

5. Inverseur de poussée selon l'une quelconque des revendications 2 à 4, **caractérisé en ce qu'**il comporte des bielle(tte)s doubles (20) (ou quadruple, ou multiple de deux) disposées symétriquement par rapport à l'axe du vérin (8), présentant chacune un pivot (22) relié aux capots (4).

6. Inverseur de poussée selon l'une quelconque des revendications précédentes, **caractérisé en ce que** les dispositifs de blocage (70) présentent deux positions qui peuvent alternativement bloquer les capots (4) sur la structure fixe avant (2), ou bloquer la tuyère secondaire (6) sur ces capots.

7. Inverseur de poussée selon la revendication 6, **caractérisé en ce que** les dispositifs de blocage comportent un verrou (70) lié aux capots (4), qui bascule pour engager alternativement un moyen d'accrochage situé d'un côté sur la structure avant (2), ou un autre moyen d'accrochage situé de l'autre côté sur les moyens d'inversion du sens de déplacement (20).

8. Inverseur de poussée selon l'une quelconque des revendications précédentes, **caractérisé en ce que** les dispositifs de blocage (46) comportent des moyens élastiques (48) donnant deux positions stables de blocage et de déblocage.

9. Inverseur de poussée selon la revendication 8, **caractérisé en ce que** les dispositifs de blocage (70) comportent des leviers (44) liés par des pivots (42) aux capots (4), comportant des moyens de blocage (46) venant s'ajuster sur des éléments (40) liés aux vérins (8), un ressort (48) étant comprimé entre ces leviers pour donner les deux positions stables de blocage et de déblocage.

10. Nacelle de turboréacteur comportant un inverseur de poussée, **caractérisée en ce que** cet inverseur est réalisé selon l'une quelconque des revendications précédentes.

## Patentansprüche

1. Schubumkehrvorrichtung einer Mantelstrom-Turboluftstrahltriebwerksgondel, umfassend bewegliche Hauben (4), die mit Bezug auf eine vordere feste Struktur (2) zurückversetzt sind, um Schubumkehrgitter freizusetzen, sowie eine variable Sekundärdüse (6), die mit den beweglichen Hauben durch Führungsmittel verbunden ist, die ein axiales Gleiten des Systems für den Betrieb dieser variablen Sekundärdüse ermöglichen, und Aktuatoren (8), die auf der vorderen Struktur (2) aufliegen, um Mittel zur Umkehrung der Verschiebungsrichtung (20), die mit den beweglichen Hauben (4) verbunden sind, zu betreiben, die die variable Sekundärdüse (6) zurückversetzen, wenn diese Aktuatoren einen Weg nach vorne freisetzen, **dadurch gekennzeichnet, dass** sie Blockierungsvorrichtungen (30, 46, 70) umfasst, die die Sekundärdüse mit den beweglichen Hauben verbinden, wenn diese Haube ausgefahren ist.

2. Schubumkehrvorrichtung nach Anspruch 1, **dadurch gekennzeichnet, dass** die Mittel zur Umkehrung der Verschiebungsrichtung, Pleuelstangen/Nebenpleuelstangen (20) umfassen, die durch Zapfen (22) an die beweglichen Hauben (4) fixiert sind.

3. Schubumkehrvorrichtung nach Anspruch 2, **dadurch gekennzeichnet, dass** jede Pleuelstange/Nebenpleuelstange (20) in einem zentralen Teil durch einen Zapfen (22) mit den bewegliche Hauben (4) fixiert ist, wobei ein Ende (24) durch ein Gelenk mit dem Aktuator (8) verbunden ist, wobei das andere Ende (26) ebenfalls durch ein Gelenk mit der Sekundärdüse (6) verbunden ist.

4. Schubumkehrvorrichtung nach Anspruch 2 oder 3, **dadurch gekennzeichnet, dass** sie Verriegelungen (30, 32) umfasst, die Enden (24, 26) der Pleuelstangen/Nebenpleuelstangen (20) blockieren.

5. Schubumkehrvorrichtung nach einem beliebigen der Ansprüche 2 bis 4, **dadurch gekennzeichnet, dass** sie doppelte (20) (oder vierfache oder ein Vielfaches von zwei) Pleuelstangen/Nebenpleuelstangen umfasst, die symmetrisch mit Bezug auf die Achse des Aktuators (8) angeordnet sind, die jeweils einen Zapfen (22) darstellen, der mit den Hauben (4) verbunden ist.

6. Schubumkehr nach einem beliebigen der vorhergehenden Ansprüche, **dadurch gekennzeichnet, dass** die Blockierungsvorrichtungen (70) zwei Positionen darstellen, die alternativ die Hauben (4) auf der festen vorderen Struktur (2) blockieren oder die Sekundärdüse (6) auf diesen Hauben blockieren können.

7. Schubumkehrvorrichtung nach Anspruch 6, **dadurch gekennzeichnet, dass** die Blockierungsvorrichtungen eine Verriegelung (70) umfassen, die mit den Hauben (4) verbunden ist, die schwenkt, um alternativ ein Befestigungsmittel, das sich an einer Seite auf der vorderen Struktur (2) befindet, oder ein anderes Befestigungsmittel einzugreifen, das sich an der anderen Seite auf den Mitteln zur Umkehrung der Verschiebungsrichtung (20) befindet.

8. Schubumkehrvorrichtung nach einem beliebigen der vorhergehenden Ansprüche, **dadurch gekennzeichnet, dass** die Blockierungsvorrichtungen (46) elastische Mittel (48) umfassen, die zu zwei stabilen Positionen des Blockierens und des Entblockierens führen.

9. Schubumkehrvorrichtung nach Anspruch 8, **dadurch gekennzeichnet, dass** die Blockierungsvorrichtungen (70) Hebel (44) umfassen, die durch Zapfen (42) an die Hauben (4) befestigt sind, umfassend Blockierungsmittel (46), die sich auf Elementen (40) anpassen, die an die Aktuatoren (8) gebunden sind, wobei eine Feder (48) zwischen diesen Hebeln komprimiert ist, um zu den zwei stabilen Positionen des Blockierens und des Entblockierens zu führen.

10. Turbostrahltriebweksgondel, umfassend eine Schubumkehrvorrichtung, **dadurch gekennzeichnet, dass** diese Umkehrvorrichtung nach einem beliebigen der vorhergehenden Ansprüche durchgeführt ist.

## Claims

1. A thrust reverser of a bypass turbojet engine nacelle, comprising movable cowls (4) that move rearward relative to a front fixed structure (2) in order to uncover thrust reverser cascades, as well as a secondary variable nozzle (6) connected to the movable cowls by guide means allowing an axial sliding of the control system of this secondary variable nozzle, and cylinders (8) bearing on the front structure (2) to control reversal means of the direction of displacement (20) connected to the movable cowls (4), that move the secondary variable nozzle (6) rearward when these cylinders provide a forward stroke, **characterized in that** it includes blocking devices (30, 46, 70) that connect the secondary nozzle to the mobile cowls when this nozzle is deployed.

2. The thrust reverser according to claim 1, **characterized in that** the reversal means of the direction of displacement include tie/connecting rods (20) fastened by pivots (22) to the movable cowls (4).

3. The thrust reverser according to claim 2, **characterized in that** each tie/connecting rod (20) is fastened in a central portion by a pivot (22) to the movable cowls (4), one end (24) being connected by a hinge to the cylinder (8), the other end (26) being also connected by a hinge to the secondary nozzle (6).

4. The thrust reverser according to claim 2 or 3, **characterized in that** it includes locks (30, 32) that block ends (24, 26) of the tie/connecting rods (20).

5. The thrust reverser according to any one of claims 2 to 4, **characterized in that** it includes double (or quadruple or a multiple of two) tie/connecting rods (20) disposed symmetrically with respect to the axis of the cylinder (8), each having a pivot (22) connected to the cowls (4).

6. The thrust reverser according to any one of the preceding claims, **characterized in that** the blocking devices (70) have two positions that can alternatively block the cowls (4) on the front fixed structure (2), or block the secondary nozzle (6) on these cowls.

7. The thrust reverser according to claim 6, **characterized in that** the blocking devices include a lock (70) connected to the cowls (4), that switches to alternately engage a hooking means located, on one side, on the front structure (2), or another hooking means located, on the other side, on the reversal means of the direction of displacement (20).

8. The thrust reverser according to any one of the preceding claims, **characterized in that** the blocking devices (46) include elastic means (48) giving two blocking and unblocking stable positions.

9. The thrust reverser according to claim 8, **characterized in that** the blocking devices (70) include levers (44) connected by pivots (42) to the cowls (4), including blocking means (46) fitting on elements (40) connected to the cylinders (8), a spring (48) being compressed between these levers to give the two blocking and unblocking stable positions.

10. A turbojet engine nacelle including a thrust reverser, **characterized in that** this thrust reverser is made according to any one of the preceding claims.
